# FASCICULE DE BREVET EUROPEEN

(11) **EP 0 921 070 B1**
(45) Date de publication et mention de la délivrance du brevet: **09.06.2004**
(21) Numéro de dépôt: 98403080.9
(22) Date de dépôt: 08.12.1998
(51) Int. Cl.: B64C 13/50

(54) **Actionneur de gouverne de commande de vol d'aéronef**
Stellantrieb für die Steuerfläche eines Flugzeuges
Aircraft flight control surface actuator

(30) Priorité: 08.12.1997 FR 9715480
(43) Date de publication de la demande: 09.06.1999
(73) Titulaire: SFIM INDUSTRIES, 91300 Massy (FR)
(72) Inventeur: Audren, Jean Thierry, 78470 Saint Remy les Chevreuse (FR)
(74) Mandataire: Schrimpf, Robert

(56) Documents cités:
- EP-A- 0 089 177
- US-A- 5 626 312
- "Actioneurs : Des materiaux piézo-électriquespour les commandes du futur" L'USINE NOUVELLE, no. 2568, 31 octobre 1996, pages 52-53, XP002074596
- RECHERCHE: "Des commandes de vol piézo-électriques" AIR & COSMOS/AVIATION INTERNATIONAL, vol. 1602, 28 février 1997, pages 20-21, XP002074597
- INDERJIT CHOPRA: "DEVELOPMENT OF A SMART ROTOR" PROCEEDINGS OF THE EUROPEAN ROTORCRAFT FORUM, CERNOBBIO, SEPT. 14 - 16, 1993, vol. VOL. 2, no. FORUM 19, 14 septembre 1993, pages N6-00-N6-18, XP000453883 ASSOCIAZONE ITALIANA DI AERONAUTICA ED ASTRONAUTICA
- R. LE LETTY ET AL: "A New Amplified Piezoelectric Actuator for Precise Positioning and Active Damping" PROCEEDINGS OF SPIE, 3 - 6 mars 1997, pages 496-504, XP002096109

## Description

La présente invention est relative aux actionneurs de gouverne de commande de vol d'aéronef.

on rappelle qu'il existe à bord des aéronefs deux types de commandes de vol :
- les commandes primaires qui servent à commander les mouvements immédiats ; sur un avion, ce sont en général des volets situés dans les bords de fuite des ailes ;
- les commandes de vols secondaires qui servent à régler la configuration aérodynamique de l'aéronef en conformité avec les phases de vol ; on trouve dans cette catégorie les becs et volets hypersustentateurs et le plan fixe arrière.

Les commandes de vol primaires ou secondaires sont en général réalisées par des dispositifs hydrauliques.

Mais, pour diverses raisons (maintenance, pollution, risque d'incendie, etc...), les constructeurs d'avion cherchent à réduire la part de l'hydraulique dans la commande au profit de commandes électriques.

Un but de l'invention est de proposer une commande de vol primaire de type électrique.

Il a déjà été proposé, pour les commandes de vol secondaires, de réaliser des actionneurs au moyen de moteurs dits à vibrations, dans lesquels des vibrations tangentielles et normales générées sur un stator sont transformées en mouvement continu grâce au frottement du contact mécanique entre ledit stator et le rotor.

Pour une présentation générale de l'utilisation de ce type de moteur pour des commandes de vol secondaires, on pourra par exemple se référer à :
« Actionneurs - Des matériaux piézoélectriques pour les commandes du futur » - Usine nouvelle - 31 octobre 1996 - n°2568
« Des commandes de vol piézoélectriques » - Air et Cosmos/Aviation International - n°1602 - 28 février 1997.

On sait que les moteurs primaires doivent quant à eux assurer deux types de mouvements :
- des mouvements permanents de faible amplitude nécessaires au pilotage à court terme de l'avion (stabilisation) ; ces mouvements ont un spectre fréquentiel qui s'étend au-delà du spectre des mouvements de l'avion ;
- des mouvements de grande amplitude, beaucoup moins fréquents que les mouvements permanents et de largeur de spectre très réduite ; ces mouvements correspondent à l'initialisation de grands mouvements d'aéronefs, tels que, sur un avion, la mise en roulis nécessaire à un virage.

Les moteurs à vibrations pourraient constituer des candidats intéressants pour les commandes primaires, puisqu'ils sont aptes à présenter des densités d'énergie élevée, sont capables de supporter de fortes contraintes et permettent des mouvements de grande amplitude.

Toutefois, sur ce type de moteur, les mouvements permanents de faible amplitude conduisent à une usure très rapide de l'interface, de sorte que ces moteurs ont une durée d'utilisation limitée.

Il a également déjà été proposé, pour les commandes secondaires, des actionneurs utilisant directement le déplacement de matériaux piézoélectriques, électrostrictifs ou magnétostrictifs, éventuellement amplifié, pour réaliser le débattement limité de la gouverne.

Des structures d'actionneurs directs de ce type ont par exemple été décrites dans :
« A new amplifier piezoelectric actuator for precise positioning and semi-passive damping » - R. Le Letty, F. Claeyssen, G. Thomin - 2^{nd} space microdynamics and accurate control symposium - 13-16 Mai 1997 - Toulouse.

Toutefois, même amplifiés, ces actionneurs ne permettent pas des amplitudes suffisantes pour des commandes de vol primaires.

L'invention propose quant à elle un actionneur d'une gouverne de commande primaire d'aéronef, caractérisé en ce qu'il comporte au moins un moteur qui est de type à vibrations et qui est monté en série avec au moins un deuxième moteur, qui est un actionneur piézoélectrique, électrostrictif ou magnétostrictif, de type direct, et en ce qu'il comporte en outre des moyens de gestion qui commandent l'un et l'autre de ces moteurs de façon que le second assure les mouvements de la gouverne qui sont du type de ceux utilisés pour la stabilisation de l'aéronef, tandis que le moteur à vibrations assure des mouvements de plus grande amplitude.

Avec un tel actionneur, on dispose à la fois des avantages des moteurs à vibrations, lesquels permettent une grande amplitude des débattements, et des avantages des actionneurs directs lesquels permettent d'assurer une durée d'utilisation importante.

Par ailleurs, cet actionneur est avantageusement complété par les différentes caractéristiques suivantes prises seules ou selon toutes leurs combinaisons techniquement possibles :
- Les moyens de gestion comportent une électronique qui commande l'un et l'autre de ces deux moteurs en fonction d'une part d'un signal de consigne extérieur et d'autre part de signaux en sortie de deux détecteurs qui fournissent l'un une information sur la position de la gouverne, l'autre une information sur la position angulaire relative entre les sorties de l'un et l'autre des deux moteurs montés en série.
- Le moteur qui est un actionneur de type direct est commandé par une boucle d'asservissement destinée à maintenir la position de la gouverne sur la consigne de vol.
- Les moyens de gestion commandent le moteur à vibrations en vitesse, en fonction de l'angle relatif entre les sorties de l'un et l'autre des deux moteurs, selon une loi de commande non linéaire.
- La loi de commande est telle
   . que la rotation du moteur à vibrations n'est pas commandée, tant que ledit angle relatif est inférieur à un seuil donné,
   . que la rotation du moteur est commandée pour qu'il tourne à une vitesse donnée, lorsque ledit angle relatif devient supérieure en valeur absolue à ce seuil,
   . que la rotation du moteur est à nouveau coupée lorsque ledit angle relatif redevient nul.
- L'actionneur comporte en outre des moyens de filtrage en sortie de la commande non linéaire.
- L'actionneur comporte en série plusieurs moteurs à vibrations et plusieurs moteurs de type direct.

D'autres caractéristiques et avantages ressortiront encore de la description qui suit. Cette description est purement illustrative et non limitative. Elle doit être lue en regard des dessins annexés sur lesquels :
- la figure 1 est une représentation schématique d'un actionneur conforme à un mode de réalisation possible de l'invention ;
- la figure 2 est un schéma illustrant la structure des moyens de commandes de l'actionneur de la figure 1 ;
- la figure 3 est une représentation synoptique de ces moyens de commandes ;
- la figure 4 est un graphe sur lequel on a porté la loi de commande du moteur à vibration de l'actionneur de la figure 1 ;
- les figures 5a à 5d sont des graphes temporels illustrant une séquence de commande de l'actionneur ;
- la figure 6 est un schéma similaire à celui de la figure 1 illustrant un autre mode de réalisation possible pour l'invention.

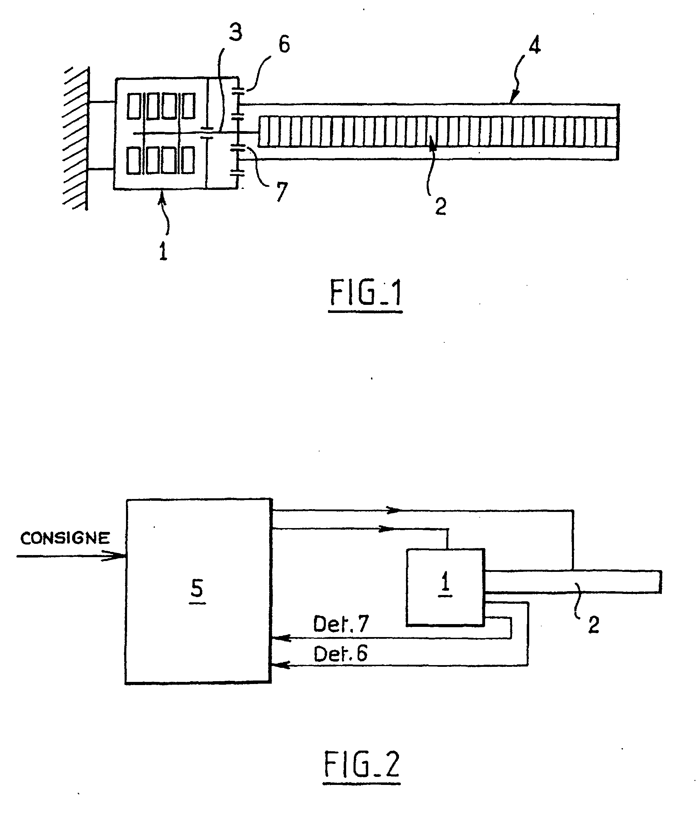

L'actionneur illustré sur la figure 1 comporte d'une part un moteur 1, qui est de type à vibrations et qui permet des mouvements de grande amplitude, et d'autre part un moteur 2, qui est un actionneur piézoélectrique, électrostrictif ou magnétostrictif, qui est de type direct et qui assure les mouvements de petite amplitude.

Ces deux moteurs 1 et 2 sont montés en série. Plus particulièrement, le moteur 2 est monté sur un arbre 3 entraîné par le moteur 1. Ce moteur 2 entraîne lui-même une structure d'attache 4 sur laquelle est montée la gouverne actionnée par lesdits moteurs 1 et 2.

Le moteur 1 à vibrations est par exemple du type de ceux décrits dans la demande de brevet français de la demanderesse publiée sous le numéro 2.742.011 ou dans sa de mande de brevet français déposée sous le numéro 9710948.

Le moteur 2 est par exemple un actionneur amplifié du type de ceux décrits dans :

"A new amplifier piezoelectric actuator for precise positioning and semi-passive damping" - R. Le Letty, F. Claeyssen, G. Thomin - 2^{nd} space microdynamics and accurate control symposium - 13-16 Mai 1997 - Toulouse.

En variante, il peut également avantageusement être du type de ceux décrits dans les demandes de brevet de demanderesses déposées sous les numéros 9712774 et 9712775.

Ainsi que l'illustre la figure 2, les deux moteurs 1 et 2 sont commandés par une électronique 5 qui gère la commande desdits moteurs 1 et 2 en fonction d'une part d'une consigne de vol et d'autre part de données fournies par deux détecteurs 6 et 7.

Le détecteur 6 est un détecteur angulaire qui transmet à l'électronique de gestion 5 une information sur la position absolue de la gouverne ou de la structure d'attache 4.

Le détecteur 7 est également un détecteur angulaire et transmet à l'électronique de gestion 5 une information sur la rotation relative entre l'arbre 3 et la structure 4.

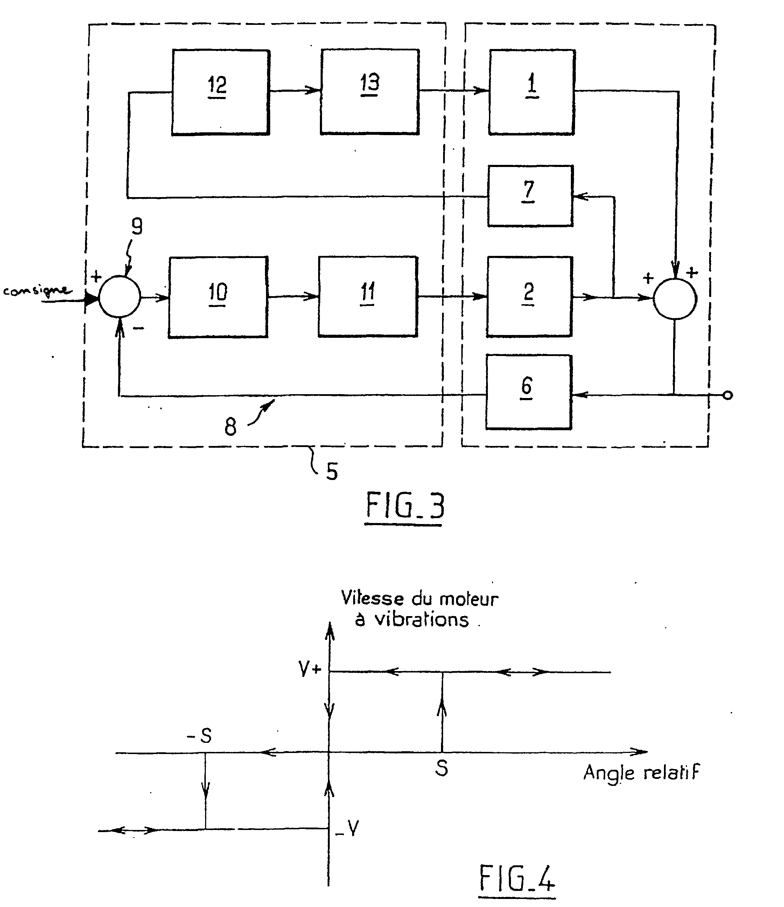

Une représentation schématique d'une commande possible pour les moteurs 1 et 2 est donnée sur la figure 3.

L'actionneur amplifié que constitue le moteur 2 est commandé par une boucle d'asservissement 8 destinée à maintenir la position de la gouverne sur la consigne extérieur.

Cette boucle 8 comporte notamment le détecteur 6, des moyens 9 de soustraction pour générer un signal d'erreur à partir du signal de consigne et du signal en sortie du détecteur 6, des moyens 10 pour générer un signal de correction à partir de ce signal d'erreur, ainsi qu'une interface 11 qui commande le moteur 2 en fonction de ce signal de correction.

Le moteur 1 est quant à lui commandé en vitesse selon une loi de commande non linéaire.

L'électronique de gestion 5 comporte à cet effet, ainsi qu'on l'a représenté sur la figure 3 des moyens 12 de traitement qui génèrent, selon ladite loi de commande, un signal de commande de moteur en fonction de la sortie du détecteur 7. Ladite électronique 5 comporte également une interface 13 pour la commande du moteur 1 en fonction de ce signal.

La loi de commande non linéaire est par exemple du type de celle illustrée sur la figure 4.

Tant que la mesure d'angle que réalise le détecteur 7 est inférieure à un seuil S donné, la rotation du moteur 2 n'est pas commandée.

Par contre, lorsque cette mesure d'angle devient supérieure en valeur absolue à ce seuil S, on commande la rotation du moteur 1 pour qu'il tourne à une vitesse ± V de même sens que l'angle relatif mesuré par le détecteur 7.

La rotation du moteur 1 est à nouveau coupée lorsque cet angle relatif redevient nul.

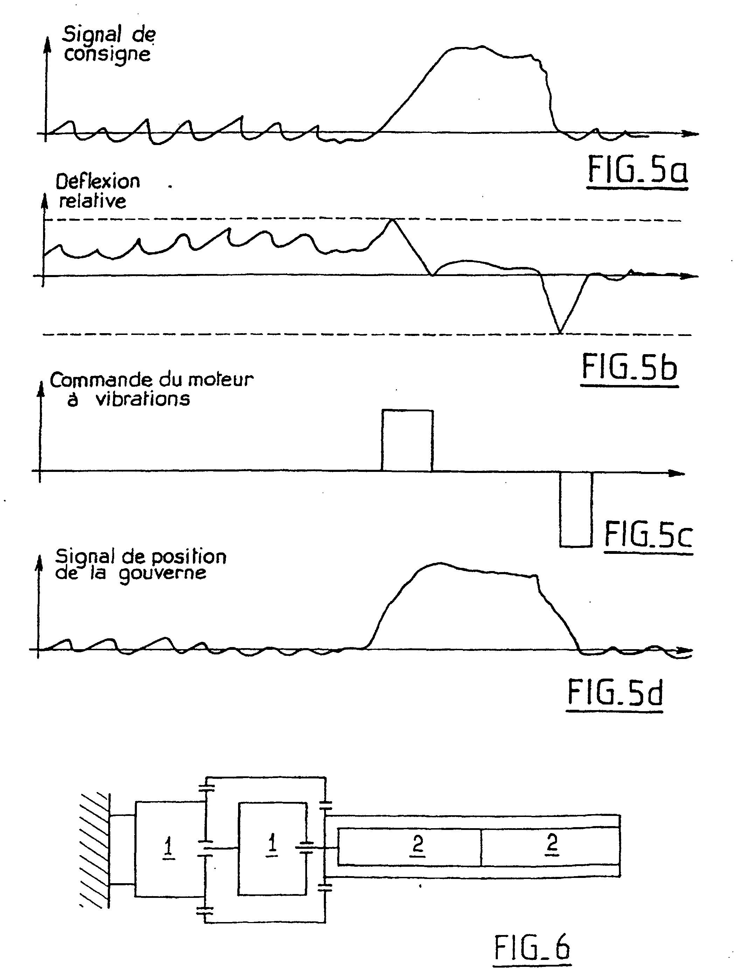

Un exemple de séquence de fonctionnement est illustré sur les figures 5a et 5d.

Les figures 5a et 5d représentent respectivement le signal de consigne et le signal de mesure de position de gouverne.

La figure 5b représente le signal de mesure de la déflexion relative entre la gouverne et le détecteur 7.

La figure 5c représente le signal de commande du moteur 1 en sortie des moyens de gestion non linéaires.

Avantageusement, il est prévu en sortie des moyens 12 qui mettent en oeuvre le traitement non linéaire un filtre (non représenté) destiné à limiter le contenu fréquentiel de la commande du moteur 1.

Un tel filtre permet de ne pas perturber la boucle principale qui commande l'actionneur amplifié.

Pour compenser les retards de commande qui pourraient être introduits par un tel filtre, il peut être prévu en amont des moyens 12 destinés à introduire une commande anticipée du moteur 1.

L'électronique de gestion 5 qui vient d'être décrite peut être réalisée au moyen de circuits analogiques ; elle peut également être constituée par un calculateur mettant en oeuvre un traitement numérique. Dans ce dernier cas, notamment, cette électronique de gestion 5 peut être intégrée au calculateur de commande de vol de l'aéronef.

Egalement, les boucles d'asservissement peuvent intégrer des techniques d'optimisation classiquement connues en automatique de façon à améliorer les performances du dispositif.

D'autres variantes de réalisation sont bien entendu possibles, dans l'étendue des revendications ci-jointes.

En particulier, ainsi qu'illustré sur la figure 6, il est possible de mettre en série plusieurs moteurs à vibrations 1 et plusieurs moteurs 2 de type actionneur direct.

## Revendications

1. Actionneur d'une gouverne de commande primaire d'aéronef, **caractérisé en ce qu'**il comporte au moins un moteur (1) qui est de type à vibrations et qui est monté en série avec au moins un deuxième moteur (2), qui est un actionneur piézoélectrique, électrostrictif ou magnétostrictif, de type direct, et **en ce qu'**il comporte en outre des moyens de gestion (5) qui commandent l'un et l'autre de ces moteurs (1, 2) de façon que le second (2) assure les mouvements de la gouverne qui sont du type de ceux utilisés pour la stabilisation de l'aéronef, tandis que le moteur à vibrations (1) assure des mouvements de plus grande amplitude.

2. Actionneur selon la revendication 1, **caractérisé en ce que** les moyens de gestion (5) comportent une électronique qui commande l'un et l'autre de ces deux moteurs (1, 2) en fonction d'une part d'un signal de consigne extérieur et d'autre part de signaux en sortie de deux détecteurs (6, 7) qui fournissent l'un (6) une information sur la position de la gouverne, l'autre une information sur la position angulaire relative entre les sorties de l'un et l'autre des deux moteurs (1, 2) montés en série.

3. Actionneur selon la revendication 2, **caractérisé en ce que** le moteur (2) qui est un actionneur de type direct est commandé par une boucle d'asservissement (8) destinée à maintenir la position de la gouverne sur la consigne de vol.

4. Actionneur selon l'une des revendications 2 et 3, **caractérisé en ce que** les moyens de gestion (5) commandent le moteur à vibrations (1) en vitesse, en fonction de l'angle relatif entre les sorties de l'un et l'autre des deux moteurs (1, 2), selon une loi de commande non linéaire.

5. Actionneur selon la revendication 2, **caractérisé en ce que** la loi de commande est telle
- que la rotation du moteur à vibrations (1) n'est pas commandée, tant que ledit angle relatif est inférieur en valeur absolue à un seuil donné,
- que la rotation du moteur (1) est commandée pour qu'il tourne à une vitesse donnée, lorsque ledit angle relatif devient supérieure en valeur absolue à ce seuil,
- que la rotation du moteur (1) est à nouveau coupée lorsque ledit angle relatif redevient nul.

6. Actionneur selon l'une des revendications 4 et 5, **caractérisé en ce qu'**il comporte en outre des moyens de filtrage en sortie de la commande non linéaire.

7. Actionneur selon l'une des revendications précédentes, **caractérisé en ce qu'**il comporte en série plusieurs moteurs à vibrations (1) et plusieurs moteurs (2) de type direct.

## Patentansprüche

1. Aktuator einer Steuerfläche einer primären Steuerung eines Luftfahrzeuges, **dadurch gekennzeichnet, daß** er wenigstens einen Motor (1) umfaßt, der vom Vibrationstyp ist und der in Serie mit wenigstens einem zweiten Motor (2) angeordnet ist, der ein piezoelektrischer, elektrostriktiver oder magnetostriktiver Aktuator vom Direkttyp ist, und daß er außerdem Steuermittel (5) umfaßt, die den einen und den anderen dieser Motoren (1, 2) derart steuern, daß der zweite (2) die Bewegungen der Steuerfläche sicherstellt, die von der Art sind, wie sie für die Stabilisierung des Luftfahrzeuges verwendet werden, während der Vibrationsmotor (1) die Bewegungen mit größerer Amplitude sicherstellt.

2. Aktuator nach Anspruch 1, **dadurch gekennzeichnet, daß** die Steuermittel (5) eine Elektronik umfassen, die den einen und den anderen dieser beiden Motoren (1, 2) abhängig einerseits von einem externen Vorgabesignal und andererseits von Signalen am Ausgang zweier Detektoren (6, 7) steuert, von denen der eine eine Information über die Position der Steuerfläche und der andere eine Information über die relative Winkelposition zwischen den Ausgängen des einen und des anderen der beiden in Serie angeordneten Motoren (1, 2) liefert.

3. Aktuator nach Anspruch 2, **dadurch gekennzeichnet, daß** der Motor (2), der ein Aktuator vom Direkttyp ist, über eine Regelungsschleife (8) gesteuert wird, die dazu bestimmt ist, die Position der Steuerfläche auf der Flugvorgabe zu halten.

4. Aktuator nach einem der Ansprüche 2 und 3, **dadurch gekennzeichnet, daß** die Steuermittel (5) den Vibrationsmotor (1) in der Geschwindigkeit abhängig vom relativen Winkel zwischen den Ausgängen des einen und des anderen der beiden Motoren (1, 2) gemäß einem nicht-linearen Steuergesetz steuern.

5. Aktuator nach Anspruch 2, **dadurch gekennzeichnet, daß** das Steuergesetz derart ist, daß
- die Rotation des Vibrationsmotors (1) nicht angesteuert wird, solange der relative Winkel kleiner im Absolutwert als ein vorgegebener Schwellwert ist,
- die Rotation des Motors (1) angesteuert wird, damit sich dieser mit einer vorgegebenen Geschwindigkeit dreht, wenn der relative Winkel größer im Absolutwert als dieser Schwellwert wird,
- die Rotation des Motors (1) erneut unterbrochen wird, wenn der relative Winkel auf Null zurückkehrt.

6. Aktuator nach einem der Ansprüche 4 und 5, **dadurch gekennzeichnet, daß** er außerdem Filtermittel am Ausgang der nicht-linearen Steuerung umfaßt.

7. Aktuator nach einem der vorhergehenden Ansprüche, **dadurch gekennzeichnet, daß** er in Serie mehrere Vibrationsmotoren (1) und mehrere Motoren (2) vom Direkttyp umfaßt.

## Claims

1. An actuator for a primary control surface of an aircraft, the actuator being **characterized in that** it comprises at least one motor (1) of the vibration type mounted in series with at least a second motor (2) which is a piezoelectric, electrostrictive, or magnetostrictive actuator of the direct type, and **in that** it further includes control means (5) causing one or both of the motors (1, 2) to operate in such a manner that the second motor (2) drives movements of the control surface of the type used for stabilizing the aircraft, while the vibration motor (1) drives movements of greater amplitude.

2. An actuator according to claim 1, **characterized in that** the control means (5) comprise an electronic circuit controlling both of the motors (1, 2) as a function firstly of an external set point signal and secondly of signals output by two detectors (6, 7), one (6) providing information concerning the position of the control surface, and the other providing information concerning the relative angular position between the outlets of the two motors (1, 2) mounted in series.

3. An actuator according to claim 2, **characterized in that** the motor (2) is an actuator of the direct type and is controlled by a servo-control loop (8) designed to maintain the position of the control surface on the flight set point.

4. An actuator according to claim 2 or 3, **characterized in that** the control means (5) apply speed control to the vibration motor (1) as a function of the relative angle between the outlets of the two motors (1, 2) and in application of a non-linear control law.

5. An actuator according to claim 2, **characterized in that** the control law is such that:
· the vibration motor (1) is not caused to rotate so long as the absolute value of said relative angle is less than a given threshold;
· the motor (1) is caused to rotate at a given speed when the absolute value of said relative angle exceeds the threshold; and
· rotation of the motor (1) is stopped when said relative angle becomes zero.

6. An actuator according to claim 4 or 5, **characterized in that** it further includes filter means at the outlet of the non-linear control.

7. An actuator according to any preceding claim, **characterized in that** it comprises a plurality of vibration motors (1) and a plurality of direct type motors (2) in series.
